# EUROPÄISCHE PATENTANMELDUNG

(11) **EP 1 614 952 A1**
(43) Veröffentlichungstag der Anmeldung: **11.01.2006**
(21) Anmeldenummer: 05012447.8
(22) Anmeldetag: 09.06.2005
(51) Int. Cl.: F16L 47/02

(54) **Kupplung, Leitung, Anordnung derselben, Verfahren zu deren Herstellung sowie Verfahren zum Verbinden und Lösen von Leitungen**

(30) Priorität: 09.07.2004 DE 102004033349
(71) Anmelder: VERITAS AG, 63571 Gelnhausen (DE)
(72) Erfinder: Haschka, Karl, 63584 Gründau (DE); Pöppel, Arthur, 63571 Gelnhausen (DE); Rösch, Thomas, 63589 Linsengericht-Grossenhausen (DE); Pascuzzi, Sergio, 64347 Griesheim (DE)
(74) Vertreter: Grünecker, Kinkeldey, Stockmair & Schwanhäusser Anwaltssozietät

(57) **Zusammenfassung**

Die Erfindung betrifft eine Kupplung, insbesondere eine Schnellkupplung, zum Verbinden von Leitungen mit einem ersten Anschlussbereich (1) und wenigstens einem zweiten Anschlussbereich, wobei der erste Anschlussbereich zumindest abschnittweise eine seiner Kontur angepasste Lage (2) aufweist. Die Lage umfasst energetisch anregbare Partikel und ist mit einem Leitungsende einer der zu verbindenden Leitungen in Anlage bringbar.

## Beschreibung

Die Erfindung bezieht sich auf eine Kupplung zum Verbinden von Leitungen mit einem ersten Anschlussbereich und wenigstens einem zweiten Anschlussbereich. Die Erfindung bezieht sich ferner auf eine Leitung, insbesondere für den Anschluss an eine Kupplung, mit einem ersten Leitungsende, auf eine Anordnung, umfassend eine Kupplung und eine Leitung, und auf eine Anordnung, umfassend zwei Leitungen. Des Weiteren bezieht sich die Erfindung auf ein Verfahren zum Herstellen einer Kupplung bzw. einer Leitung und auf ein Verfahren zum Verbinden bzw. Lösen von Leitungen.

Kupplungen zum Verbinden von Leitungen mit einem ersten Anschlussbereich und wenigstens einem zweiten Anschlussbereich sind bekannt und werden beispielsweise von der Anmelderin auf den Markt gebracht. Derartige Kupplungen finden insbesondere im Bereich der Automobilindustrie zum Verbinden von Kraftstoffschläuchen Verwendung. Dabei kommt es auf eine mechanisch feste Verbindung an, die derart sicher ist, dass bei einem Unfall eine Zerstörung der Schlauchverbindung weitgehend vermieden wird. Außerdem muss die Schlauchverbindung so dicht sein, dass kein Kraftstoff im Bereich der Verbindung durch Leckage austreten kann.

Üblicherweise erfolgt die mechanische Verbindung zwischen der Kupplung und der Leitung durch einen Anschlussbereich, der ein sogenanntes Tannenbaum-Profil mit Hinterschneidungen aufinreist, die eine mechanische Auszugsicherung bilden. Um die erforderliche Dichtigkeit zu erzielen, werden der Anschlussbereich und das Leitungsende zusätzlich oder alternativ zu der mechanischen Sicherung verklebt oder verschweißt.

Dabei kommt insbesondere das Reibschweißen zum Einsatz, bei dem die Kupplung und die Leitung in eine relative Drehbewegung versetzt werden, wodurch Reibungswärme in der Berührungsfläche zwischen dem Anschlussbereich und dem Leitungsende erzeugt wird. Dadurch schmelzen der Anschlussbereich und das Leitungsende in den Randzonen auf, so dass in diesem Bereich eine stoffschlüssige Verbindung gebildet wird.

Nachteilig am Reibschweißen ist, dass zur Schaffung einer geeigneten, d.h. möglichst großen Berührungsfläche der Anschlussbereich eine bestimmte Kontur aufweisen muss.

Eine weitere Möglichkeit zur Herstellung einer Schlauchverbindung ist das Verschweißen mittels Laser. Dazu muss eines der beiden zu verschweißenden Bauteile, insbesondere das außen angeordnete Bauteil, aus einem lasertransparenten Material hergestellt sein, um die Aufschmelzung der Berührungsfläche zwischen dem Anschlussbereich und dem Leitungsende zu gestatten.

Zum Verkleben der Leitung und der Kupplung wird üblicherweise ein warm aushärtender Kleber verwendet. Dieses Verfahren hat den Nachteil, dass die Kupplung und die Leitung stark erwärmt werden müssen, um die Aktivierungstemperatur des Klebers an der Verbindungsfläche zwischen dem Anschlussbereich und dem Leitungsende zu erreichen. Dabei kann es zu einer Zerstörung der Kupplung bzw. der Leitung durch übermäßige Erwärmung kommen. Außerdem ist das Aushärten des Klebers zeit- und energieintensiv.

Der Erfindung liegt deshalb die Aufgabe zugrunde, eine Kupplung anzugeben, die ein einfaches und sicheres Verbinden von Leitungen gestattet. Der Erfindung liegt ferner die Aufgabe zugrunde, eine Leitung anzugeben, die für den Anschluss an eine Kupplung vorgesehen ist und mit dieser einfach und sicher verbunden werden kann. Weiter soll ein Verfahren zur Herstellung einer solchen Kupplung und einer solchen Leitung angegeben werden. Ferner soll eine Anordnung, bei der eine Kupplung und eine Leitung bzw. zwei Leitungen sicher miteinander verbunden sind, sowie ein Verfahren zum einfachen Herstellen bzw. Lösen von Leitungsverbindungen angegeben werden.

Hinsichtlich der Kupplung, der Leitung und der Anordnung werden die vorstehend bezeichneten Aufgaben erfindungsgemäß durch die Gegenstände der Ansprüche 1, 11, 19 und 20 gelöst. Hinsichtlich der Verfahren zum Herstellen der Kupplung bzw. der Leitung und hinsichtlich des Verfahrens zum Verbinden bzw. zum Lösen von Leitungen werden die vorstehend bezeichneten Aufgaben erfindungsgemäß durch die Gegenstände der Ansprüche 22, 29, 36, 37, 38 und 39 gelöst.

Die Erfindung hat den Vorteil, dass durch die erfindungsgemäße Kupplung bzw. die erfindungsgemäße Leitung die Voraussetzungen geschaffen werden, die eine lokale Erwärmung im Bereich der Fügefläche zwischen dem ersten Anschlussbereich und dem Leitungsende ermöglichen. Dazu ist erfindungsgemäß eine Lage vorgesehen, die aufgrund ihrer Anordnung im ersten Anschlussbereich bzw. am Leitungsende im zusammengesteckten Zustand der Kupplung und der Leitung im Fügebereich zwischen dem Anschlussbereich und dem Leitungsende vorgesehen ist. Durch die erfindungsgemäß in der Lage vorgesehenen energetisch anregbaren Partikel wird es ermöglicht, Energie, insbesondere durch Strahlung, gezielt in den Fügebereich einzubringen, die dort von den energetisch anregbaren Partikeln absorbiert wird. Die Partikel geben die aufgenommene Energie in Form von Wärme ab, so dass eine lokal begrenzte Erwärmung der Lage im Fügebereich stattfinden kann. Die gezielte, begrenzte Erwärmung der Lage kann dazu benutzt werden, die für die unterschiedlichen Verbindungs- bzw. Lösetechniken erforderlichen Temperaturen bereitzustellen. Damit wird es möglich, eine Anordnung, umfassend eine Kupplung und eine mit dieser verbundene Leitung, herzustellen, ohne dass die gesamte Anordnung erwärmt werden muss, wodurch eine Beschädigung durch übermäßige Erwärmung der Kupplung bzw. der Leitung vermieden wird. Dasselbe gilt für Anordnungen umfassend zwei Leitungen, bei denen Leitungen direkt ohne Zwischenschaltung einer Kupplung verbunden werden.

Ein weiterer Vorteil der Erfindung besteht darin, dass die Erfindung flexibel zum Herstellen einer Schweißverbindung oder zum Herstellen einer Klebeverbindung verwendet werden kann, wobei lediglich das Material der Lage entsprechend ausgewählt wird, in das die energetisch anregbaren Partikel eingelagert sind.

Dasselbe gilt für die erfindungsgemäßen Verfahren. Die Erfindung bringt den Vorteil, dass sowohl das Herstellen als auch das Lösen der Leitungsverbindungen durch denselben Schritt erfolgt, nämlich durch Einbringen der Anordnung in ein magnetisches oder elektromagnetisches Feld.

Vorzugsweise sind die Partikel durch magnetische oder elektromagnetische Felder anregbar. Durch die Verwendung derart anregbarer Partikel kann auf besonders wirkungsvolle Weise die Energie in den Fügebereich eingetragen werden, ohne dass die umgebenden Bauteile thermisch beeinflusst werden.

Soll die Lage zur Herstellung einer Schweißverbindung bzw. einer Klebeverbindung eingesetzt werden, kann die Lage ein Schweißmaterial oder ein thermisch aktivierbares Klebematerial umfassen.

In einer besonders bevorzugten Ausgestaltung der Erfindung umfasst die Lage eine Folie. Dies hat den Vorteil, dass der erste Anschlussbereich der Kupplung bzw. das Leitungsende der Leitung besonders einfach mit der Lage versehen werden kann. Dabei kann die Folie durch eine Wickelbewegung aufgebracht werden.

In einer weiteren Ausgestaltung der Erfindung umfasst die Lage einen Schlauch, insbesondere einen Schrumpfschlauch. Die so ausgebildete Lage kann einfach und schnell auf den ersten Anschlussbereich bzw. das Leitungsende aufgeschoben werden, wobei im Falle der Verwendung eines Schrumpfschlauches der weitere Vorteil hinzutritt, dass durch Aufschrumpfen eine Fixierung der Lage erreicht wird. Dadurch wird das Zusammenstecken der Kupplung und der Leitung vereinfacht, da der Schrumpfschlauch nicht verschoben werden kann.

Vorzugsweise ist die Lage als Buchse ausgebildet. Die Buchse kann sehr einfach in den Aufnahmebereich eingebracht werden, beispielsweise durch Einschieben, und erleichtert den Zusammenbau und letztendlich die Herstellung der Leitungsverbindung.

Ferner kann der erste Anschlussbereich bzw. das Leitungsende und die Lage als 2-Komponenten-Teil ausgebildet sein, wobei die Lage aufgespritzt ist. Bei dieser Ausgestaltung der Erfindung bildet die Lage eine mit dem Anschlussbereich bzw. dem Leitungsende festverbundene Schicht, wodurch die Montage der Kupplung und der Leitung erleichtert wird.

Eine weitere Möglichkeit, den Anschlussbereich bzw. das Leitungsende mit der Lage zu versehen, besteht darin, die Lage mit dem Anschlussbereich bzw. dem Leitungsende zu koextrudieren. Die Koextrusion der Lage mit dem Anschlussbereich bzw. dem Leitungsende bietet eine besonders einfache Möglichkeit der Herstellung, die überdies die Montage der Kupplung und der Leitung erleichtert.

Eine Möglichkeit, den ersten Anschlussbereich der Kupplung mit der Lage in einer solchen Position zu versehen, dass die Lage mit dem Leitungsende einer der zu verbindenden Leitung in Anlage gebracht werden kann, besteht darin, die Lage an einer Innenwandung des ersten Anschlussbereiches vorzusehen. Eine weitere Möglichkeit, die Lage in der vorstehend bezeichneten Position vorzusehen, besteht darin, dass der Anschlussbereich einen Innenstutzen mit einer Außenwandung aufweist, an der die Lage vorgesehen ist.

Die Erfindung wird im Folgenden anhand schematischer Zeichnungen beispielsweise und mit weiteren Einzelheiten erläutert. Dabei zeigen:
- Fig. 1: einen Längsschnitt durch den ersten Anschlussbereich einer Kupplung nach einem erfindungsgemäßen Ausführungsbeispiel;
- Fig. 2: einen Längsschnitt durch den ersten Anschlussbereich einer Kupplung nach einem weiteren erfindungsgemäßen Ausführungsbeispiel,
- Fig. 3: einen Längsschnitt durch das Leitungsende einer Leitung nach einem erfindungsgemäßen Ausführungsbeispiel;
- Fig. 4: einen Längsschnitt durch den ersten Anschlussbereich bzw. das Leitungsende einer Anordnung, umfassend eine Kupplung und eine Leitung,
- Fig. 5: einen Längsschnitt durch eine Anordnung, umfassend zwei miteinander verbundene Leitungen,
- Fig. 6: einen Längsschnitt durch eine zur Ausbildung der Lage verwendbare Buchse und
- Fig. 7: eine perspektivische Ansicht der Buchse nach Fig. 6.

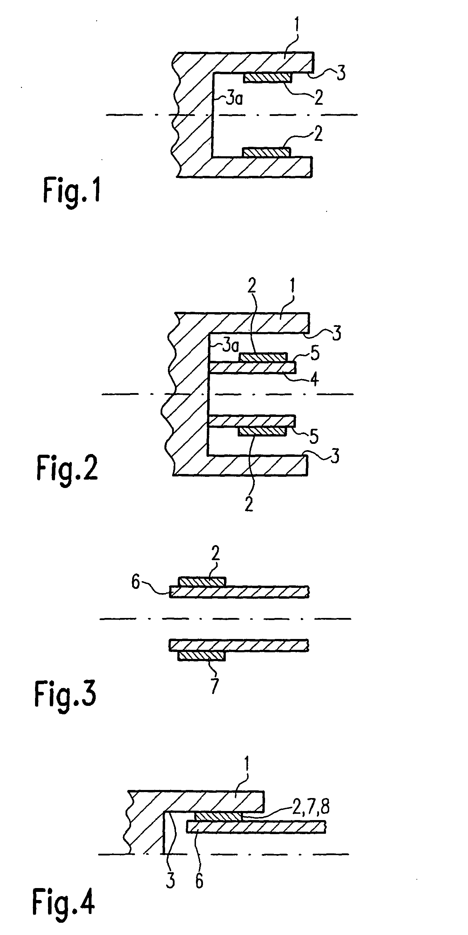

In Fig. 1 ist der erste Anschlussbereich 1 einer Kupplung, insbesondere einer Schnellkupplung (Quick-Connector) zum Verbinden von Leitungen, insbesondere von fluidführenden Leitungen, nach einem ersten Ausführungsbeispiel dargestellt. Dieser erste Anschlussbereich 1 ist dafür vorgesehen, mit dem Ende einer in Fig. 1 nicht gezeigten Leitung fest verbunden zu werden. Der in Fig. 1 nicht gezeigte zweite Anschlussbereich ist mit dem ersten Anschlussbereich 1 durch einen Kanal verbunden und kann mit dem Ende einer zweiten Leitung, beispielsweise durch einen Rastverschluss, lösbar verbunden werden.

Eine solche Kupplung wird hauptsächlich in der Automobilindustrie zum Verbinden von Kraftstoffschläuchen verwendet. Andere Einsatzgebiete für solche Kupplungen sind ebenfalls denkbar. Überdies ist die Erfindung nicht auf eine Kupplung mit zwei Anschlussbereichen begrenzt. Es ist auch möglich, dass der erste Anschlussbereich 1 mit mehr als einem weiteren Anschlussbereich durch entsprechende Verteilerkanäle verbunden ist. Außerdem kann die erfindungsgemäße Kupplung weitere Anschlussbereiche umfassen, die entsprechend dem ersten Anschlussbereich 1 ausgebildet sind.

Der erste Anschlussbereich 1, der in dem in Fig. 1 gezeigten Beispiel eine zylindrische Innenwandung 3 aufweist, ist zumindest abschnittsweise mit einer Lage 2 versehen. Die Lage 2 kann über den gesamten Umfang der Innenwandung 3 oder auch in Abschnitten, die über den Umfang verteilt sind, angeordnet sein. Die Anbringung der Lage 2 an der Innenwandung 3 des Anschlussbereiches 1 ermöglicht es, die Lage 2 mit dem in Fig. 1 nicht gezeigten Leitungsende einer Leitung in Anlage zu bringen, wenn diese in die Kupplung eingestellt wird. Dabei folgt die Lage 2 im wesentlichen der Kontur des Anschlussbereiches 1, im vorliegenden Fall der zylindrischen Innenwandung 3. Dadurch wird das Einstecken eines passend geformten Leitungsendes ermöglicht.

Erfindungsgemäß sind in der Lage 2 energetisch anregbare Partikel eingelagert, die in den Figuren nicht gezeigt sind.

Die mittlere Teilchengröße der Partikel kann im Mikrometerbereich liegen. Als besonders vorteilhaft hat es sich erwiesen, wenn die mittlere Teilchengröße im Nanometerbereich liegt, d.h. in einem Bereich zwischen wenigen Nanometern und > 100 nm. Durch Verwendung metallischer, magnetischer, ferrimagnetischer, ferromagnetischer, antiferromagnetischer oder superparamagnetischer Partikel wird die Eigenschaft der Partikel, magnetische oder elektromagnetische Strahlung zu absorbieren, erreicht. Insbesondere können für die energetisch aktivierbaren Partikel die folgenden Materialien verwendet werden:
- MagSi ®, hergestellt von der Firma Degussa
- MnZn-Ferrite
- Magnetit (Fe₃O₄)
- Eisen und
- Strontium-Ferrite.

Die in Fig. 1 dargestellte Kupplung bietet die Voraussetzung zur Herstellung einer sicheren Verbindung zwischen der Kupplung und einer Leitung mittels Kleben oder Verschweißen, ohne dass die gesamte Anordnung erwärmt werden muss. Vielmehr genügt es, zur Einstellung der erforderlichen Prozesstemperatur die zusammengesteckte Kupplung und Leitung in ein magnetisches Induktionsfeld bzw. ein Mikrowellenfeld einzubringen, so dass die in der Lage 2 enthaltenen Partikel die Strahlungsenergie absorbieren und sich dadurch erwärmen. Die in den Partikeln erzeugte Wärme wird an das umgebende Material der Lage 2 abgegeben, das dadurch erwärmt wird. Bei Erreichen der angestrebten Prozesstemperatur tritt, je nach dem Material der Lage 2, das Verschweißen oder das Verkleben des Anschlussbereichs 1 und des Leitungsendes ein. Beim Verschweißen wird die Lage 2 und die angrenzenden Oberflächen des Anschlussbereichs 1 bzw. des Leitungsendes aufgeschmolzen und bilden nach dem Erstarren eine stoffschlüssige Verbindung. Wenn die Lage 2 aus einem thermisch aktivierbaren Klebematerial hergestellt ist, wird dieses Klebematerial durch entsprechende Erwärmung mittels der energetisch anregbaren Partikel ausgehärtet, wodurch eine Klebeverbindung gebildet wird.

In Fig. 2 ist ein weiteres Ausführungsbeispiel der erfindungsgemäßen Kupplung gezeigt, bei dem der Anschlussbereich 1 einen Innenstutzen 4 mit einer Außenwandung 5 aufweist. Die Lage 2 ist in diesem Ausführungsbeispiel auf der Außenwandung 5 vorgesehen und kann somit mit dem Leitungsende einer zu verbindenden Leitung in Anlage gebracht werden, die in den Anschlussbereich 1 eingesteckt wird. Zusätzlich zu der an der Außenwandung 5 vorgesehenen Lage 2 kann eine weitere Lage an der die Außenwandung 5 gegenüberliegenden Innenwandung 3 vorgesehen sein, so dass das in den Anschlussbereich 1 eingesteckte Leitungsende beidseitig, d.h. auf der Innen- und Außenseite, verbunden ist.

Fig. 3 zeigt das Leitungsende 6 einer Leitung nach einem erfindungsgemäßen Ausführungsbeispiel, die für den Anschluss an eine Kupplung geeignet ist. Auf der Außenwandung der Leitung 6 ist eine Lage 7 vorgesehen, die an die Kontur des Leitungsendes 6 angepasst ist. Die Lage 7 kann vollumfänglich oder abschnittsweise am Leitungsende angebracht sein. Darüber hinaus umfasst die Lage 7 energetisch anregbare Partikel und entspricht im Hinblick auf die Materialzusammensetzung und die Partikelzusammensetzung der im Zusammenhang mit Fig. 1 offenbarten Lage 2.

Die in Fig. 3 dargestellte Leitung kann mit einer herkömmlichen Kupplung verwendet werden. Die Leitung kann aber auch mit der in Fig. 2 gezeigten Kupplung verwendet werden, wodurch erreicht wird, dass beide Fügeflächen (zwischen der Leitungsaußenseite und der Innenwandung 3 bzw. der Leitungsinnenseite und der Außenwandung 5) die mit den energetisch anregbaren Partikel versetzten Lagen 2, 7 aufweisen.

Fig. 4 zeigt eine Anordnung nach einem erfindungsgemäßen Ausführungsbeispiel, bei der der Anschlussbereich 1 und das Leitungsende 6 ineinander gesteckt sind. In dieser Anordnung ist im Fügebereich zwischen der Innenwandung 3 des Außenbereichs 1 und der Außenseite des Leitungsendes 6 die Lage 2, 7 angeordnet. Diese Anordnung wird einem magnetischen oder elektromagnetischen Feld ausgesetzt, so dass die in der Lage 2, 7 enthaltenen energetisch anregbaren Partikel und somit das die Partikel umgebende Material lokal erwärmt wird. In Abhängigkeit von dem für die Lage 2, 7 gewählten Material wird der Anschlussbereich 1 und das Leitungsende 6 verschweißt oder verklebt. Dadurch wird eine Schicht 8 gebildet, die den Anschlussbereich und das Leitungsende 6 fest verbindet.

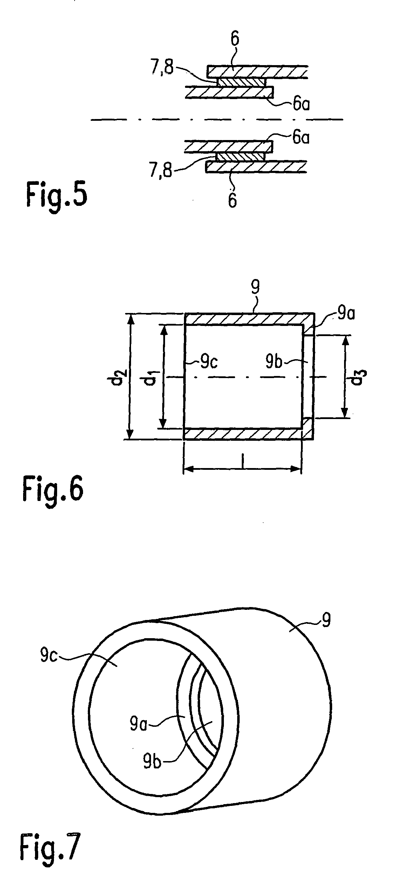

Fig. 5 zeigt ein weiteres Ausführungsbeispiel der Erfindung, bei dem zwei Leitungsenden 6, 6a zweier Leitungen direkt, d.h. ohne Zwischenschaltung einer Kupplung, miteinander verbunden sind. Dieses Ausführungsbeispiel basiert auf demselben Prinzip, wie das in Fig. 4 gezeigte Ausführungsbeispiel, das eine Anordnung aus einer Kupplung und einer Leitung betrifft. Bei der in Fig. 5 dargestellten direkten Verbindung zweier Leitungen ist ebenfalls eine Lage 7 bzw. eine Schicht 8 in der Fügefläche, d.h. zwischen der Innenfläche des äußeren Leitungsendes 6 und der Außenfläche des inneren Leitungsendes 6a angeordnet. Dabei wird, ebenfalls wie bei dem in Fig. 4 gezeigten Ausführungsbeispiel das äußere Leitungsende 6 auf das innere Leitungsende 6a so aufgeschoben, dass die Lage 7 mit den energetisch aktivierbaren Partikeln im Bereich der Fügefläche in Anlage mit dem jeweiligen Leitungsende 6, 6a gelangt. Durch Einbringen dieser Anordnung in ein magnetisches oder elektromagnetisches Feld werden die energetisch aktivierbaren Partikel erwärmt, wodurch eine Klebeverbindung bzw. eine Schweißverbindung, je nach dem gewählten Lagenmaterial, hergestellt wird. Dabei wird eine Schicht 8 gebildet, die die beiden Leitungsenden 6, 6a fest verbindet.

Die Dicke der Lage 2, 7 und letztendlich die Dicke der verbindenden Schicht 8 richtet sich nach dem Abstand zwischen den zu verbindenden Flächen des Leitungsendes 6 und des Anschlussbereiches 1. Dabei soll der Abstand so bemessen sein, dass im zusammengesteckten Zustand die Lage 2, 7 beidseitig möglichst großflächig an der jeweiligen Wandung des Anschlussbereichs 1 bzw. des Leitungsendes 6 anliegt. Es hat sich als zweckmäßig erwiesen, wenn die Dicke der Lage 2, 7 in einem Bereich von 0,1 bis 5 mm, vorzugsweise von 0,5 bis 3 mm, weiter vorzugsweise von 0,5 bis 1 mm, liegt. Die Schichtdicke hängt auch von der Art der Ausbildung der Lage ab, wobei beispielsweise bei der Ausbildung der Lage als Folie kleine Schichtdicken, insbesondere von 0,5 bis 1 mm zum Einsatz kommen. Bei der Verwendung einer Buchse 9 als Lage 2, 7 werden größere Lagendicken verwendet.

Als Klebematerialien werden Polyamide verwendet, wobei aber auch die Verwendung anderer Thermoplasten oder thermoplastischer Elastomere denkbar ist. Zum Verschweißen eignet sich als Material PA12 für die Lage 2, 7.

Die Lage 2, 7 kann entweder als separates Element auf den Anschlussbereich 1 bzw. das Leitungsende 6 oder als fest verbundene Schicht aufgebracht sein.

Die Lage 2, 7 kann als Folie (separates Element) ausgebildet sein, die beispielsweise durch eine entsprechende Wickelbewegung auf das jeweilige Bauteil aufgebracht wird. Das Aufbringen der Folie eignet sich besonders für den in Fig. 2 dargestellten Innenstutzen 4 bzw. das in Fig. 3 dargestellte Leitungsende 6. Dabei kann die Folie in einer oder auch in mehreren Lagen aufgebracht werden. Es hat sich herausgestellt, dass das einlagige Aufbringen der Folie, insbesondere mit einer Dicke von 0,5 mm bis 1 mm besonders gute Ergebnisse bringt. Mit nanoskaligen Partikeln versehene Folien werden beispielsweise von den Firmen Degussa und EMS-Chemie hergestellt.

Eine weitere Möglichkeit besteht darin, die Lage 2, 7 als Schlauch (separates Element) auszubilden, insbesondere als Schrumpfschlauch. Dieser Schlauch kann in einfacher Weise in den in Fig. 1 gezeigten Anschlussbereich 1 so eingeschoben werden, dass der Schlauch an der Innenwandung 3 anliegt. Die in den Figuren 2 und 3 gezeigte Kupplung bzw. Leitung kann mit der Lage 2, 7 dadurch versehen werden, dass der Schlauch auf den Innenstutzen 4 bzw. auf das Leitungsende 6 aufgeschoben wird. Das Zusammenstecken der Kupplung und der Leitung wird dadurch erleichtert, dass ein Schrumpfschlauch verwendet wird, der auf das jeweilige Bauteil aufgeschrumpft wird, wodurch eine Fixierung des Schlauches erreicht wird. Dadurch wird ein Verschieben der Lage 2, 7 beim Zusammenbau vermieden.

Überdies kann die Lage 2,7 durch Verwendung der in den Figuren 6, 7 gezeigten Buchse 9 realisiert werden. Die Buchse 9 ist ein Kunststoffformteil, in dem energetisch aktivierbare Partikel eingelagert sind. Die eingelagerten Partikel entsprechen den im Zusammenhang mit der Lage 2 allgemein erläuterten Partikeln. Die Ausbildung der Lage 2,7 als Buchse 9 basiert auf demselben Prinzip, wie die Ausbildung der Lage 2,7 als Folie oder als Schlauch, wobei die Buchse 9 in der Fügefläche zwischen den zu verbindenden Teilen (Anschlussbereich / Leitungsende bzw. Leitungsende 6 / Leitungsende 6a) angeordnet ist. Je nach der Materialwahl für die Buchse 9 wird im Bereich der Fügezone eine Schweißverbindung bzw. eine Klebeverbindung hergestellt, ausgelöst durch die Erwärmung der in der Buchse 9 enthaltenen energetisch aktivierbaren Partikel. Die Buchse 9 hat den Vorteil, dass beim Zusammenstecken der zu verbindenden Teile kein Verrutschen zu befürchten ist.

Wie in den Figuren 6, 7 dargestellt, weist die Buchse 9 einen radial nach innen sich erstreckenden Flansch 9a auf, der als Anschlag für ein mit der Kupplung zu verbindendes Leitungsende dient, das durch die Öffnung 9c in die Buchse 9 eingesteckt wird. Die Buchse 9 wird so in den Aufnahmebereich 1 eingeschoben, dass die Außenwandung der Buchse 9 an der Innenwandung 3 des Anschlussbereichs 1 anliegt. Der Flansch 9a stößt dabei an ein axiales Ende 3a des Anschlussbereichs 1 an.

Die in axialer Richtung sich erstreckende Wandstärke des Flansches 9a kann der Wandstärke der Buchse 9 (Differenz Außendurchmesser d₂ und Innendurchmesser d₁) entsprechen. Die Wandstärke des Flansches 9a kann aber auch kleiner oder größer als die Wandstärke der Buchse 9 sein. Überdies entspricht der Abstand d₁/2 - d₃/2, also die radiale Erstreckung des Flansches 9a, der Wandstärke der zu verbindenden Leitung. Dadurch wird erreicht, dass die im Flansch 9a ausgebildete Öffnung 9b bündig mit der Innenfläche der zu verbindenden Leitung abschließt.

In einem weiteren, nicht gezeigten Ausführungsbeispiel kann sich der Flansch 9a radial nach außen erstrecken, so dass die Innenfläche der Buchse 9 an der Außenfläche des Innenstutzens anliegt.
Die Länge I des Flansches 9 bestimmt die Klebekraft.

Eine weitere Möglichkeit, die Lage 2, 7 auf dem Anschlussbereich bzw. dem Leitungsende 6 aufzubringen, besteht darin, die Lage 7 auf den Anschlussbereich 1 bzw. das Leitungsende 6 aufzuspritzen, wodurch ein 2-Komponenten-Teil gebildet wird. In diesem Fall ist die Lage 2, 7 als Schicht mit dem Anschlussbereich bzw. dem Leitungsende 6 fest verbunden. Eine weitere Möglichkeit der Aufbringung der Lage 2, 7 besteht darin, die Lage 2, 7 mit dem Leitungsende 6 bzw. dem Anschlussbereich 1, insbesondere dem Innenstutzen 4, zu koextrudieren.

Die Erfindung schafft somit die Voraussetzung, eine Kupplung, insbesondere eine Schnellkupplung, mit einer Leitung zu verschweißen bzw. zu verkleben, wobei die Wärme lokal und kurzzeitig erzeugt wird, wodurch eine Bauteil schonende und Energie sparende Verbindung ermöglicht wird.

Überdies können nicht nur Leitungen durch Zwischenschaltung einer Kupplung mittels der Erfindung wirksam verbunden werden, sondern auch direkte Verbindungen zwischen zwei Leitungen ohne Zwischenschaltung einer Kupplung hergestellt werden.

Die Erfindung schafft außerdem die Voraussetzung, Klebe- oder Schweißverbindungen zwischen Leitungen bzw. zwischen einer Kupplung und einer Leitung auf einfache Weise zu lösen (deponding on command), was im Hinblick auf die Altauto-Richtlinie besonders vorteilhaft ist. Dazu wird die Verbindung in ein magnetisches oder elektromagnetisches Feld eingebracht, wodurch die verbindende Schicht 8, in der geeignete energetisch aktivierbare Partikel eingelagert sind, auf die zum Lösen der Verbindung erforderliche Temperatur erwärmt wird.

Die Erfindung kann insbesondere auf dem Gebiet der Verbindung von Kraftfahrzeugschläuchen, aber auch auf anderen Gebieten verwendet werden, bei denen es auf eine sichere Verbindung von Fluid führenden Leitungen ankommt.

## Patentansprüche

1. Kupplung zum Verbinden von Leitungen mit einem ersten Anschlussbereich (1) und wenigstens einem zweiten Anschlussbereich,
**dadurch gekennzeichnet, dass**
der erste Anschlussbereich (1) zumindest abschnittsweise eine seiner Kontur angepasste Lage (2) aufweist, wobei die Lage energetisch anregbare Partikel umfasst und mit einem Leitungsende einer der zu verbindenden Leitungen in Anlage bringbar ist.

2. Kupplung nach Anspruch 1, **dadurch gekennzeichnet, dass** die Partikel durch magnetische oder elektromagnetische Felder anregbar sind.

3. Kupplung nach Anspruch 1 oder 2, **dadurch gekennzeichnet, dass** die Lage (2) ein Schweißmaterial oder ein thermisch aktivierbares Klebematerial umfasst.

4. Kupplung nach wenigstens einem der Ansprüche 1 bis 3, **dadurch gekennzeichnet, dass** die Lage (2) eine Folie umfasst.

5. Kupplung nach wenigstens einem der Ansprüche 1 bis 3, **dadurch gekennzeichnet, dass** die Lage (2) einen Schlauch, insbesondere einen Schrumpfschlauch, umfasst.

6. Kupplung nach wenigstens einem der Ansprüche 1 bis 3, **dadurch gekennzeichnet, dass** die Lage (2) als Buchse (9) ausgebildet ist.

7. Kupplung nach wenigstens einem der Ansprüche 1 bis 3, **dadurch gekennzeichnet, dass** der erste Anschlussbereich (1) und die Lage (2) als 2-Komponenten-Teil ausgebildet sind, wobei die Lage (2) aufgespritzt ist.

8. Kupplung nach wenigstens einem der Ansprüche 1 bis 3, **dadurch gekennzeichnet, dass** die Lage mit dem ersten Anschlussbereich (1) koextrudiert ist.

9. Kupplung nach wenigstens einem der Ansprüche 1 bis 8, **dadurch gekennzeichnet, dass** der erste Anschlussbereich (1) eine Innenwandung (3) aufweist, an der die Lage (2) vorgesehen ist.

10. Kupplung nach wenigstens einem der Ansprüche 1 bis 9, **dadurch gekennzeichnet, dass** der erste Anschlussbereich (1) einen Innenstutzen (4) mit einer Außenwandung (5) aufweist, an der die Lage (2) vorgesehen ist.

11. Leitung, insbesondere für den Anschluss an eine Kupplung, mit einem Leitungsende (6),
**dadurch gekennzeichnet, dass**
das Leitungsende (6) zumindest abschnittsweise eine seiner Kontur angepasste Lage (7) aufweist, die energetisch anregbare Partikel umfasst.

12. Leitung nach Anspruch 11, **dadurch gekennzeichnet, dass** die Partikel durch magnetische oder elektromagnetische Felder anregbar sind.

13. Leitung nach Anspruch 11 oder 12, **dadurch gekennzeichnet, dass** die Lage (7) ein Schweißmaterial oder ein thermisch aktivierbares Klebematerial umfasst.

14. Leitung nach wenigstens einem der Ansprüche 11 bis 13, **dadurch gekennzeichnet, dass** die Lage (7) eine Folie umfasst.

15. Leitung nach wenigstens einem der Ansprüche 11 bis 13, **dadurch gekennzeichnet, dass** die Lage (7) einen Schlauch, insbesondere einen Schrumpfschlauch, umfasst.

16. Leitung nach wenigstens einem der Ansprüche 11 bis 13, **dadurch gekennzeichnet, dass** die Lage (7) als Buchse (9) ausgebildet ist.

17. Leitung nach wenigstens einem der Ansprüche 11 bis 13, **dadurch gekennzeichnet, dass** das Leitungsende (6) und die Lage (7) als 2-Komponenten-Teil ausgebildet sind, wobei die Lage (7) aufgespritzt ist.

18. Leitung nach wenigstens einem der Ansprüche 11 bis 13, **dadurch gekennzeichnet, dass** die Lage (7) mit dem Leitungsende (6) koextrudiert ist.

19. Anordnung, umfassend eine Kupplung, insbesondere eine Schnellkupplung, und eine Leitung
**dadurch gekennzeichnet, dass**
die Kupplung und die Leitung durch eine Schicht (8) verbunden sind, die energetisch anregbare Partikel umfasst.

20. Anordnung, umfassend zwei Leitungen,
**dadurch gekennzeichnet, dass**
die beiden Leitungen durch eine Schicht (8) verbunden sind, die energetisch anregbare Partikel umfasst.

21. Anordnung nach Anspruch 19 oder 20, **dadurch gekennzeichnet, dass** die Schicht (8) ein Schweißmaterial oder ein thermisch aktivierbares Klebematerial umfasst.

22. Verfahren zum Herstellen einer Kupplung, insbesondere einer Schnellkupplung, mit einem ersten Anschlussbereich (1) und wenigstens einem zweiten Anschlussbereich (1), bei dem der erste Anschlussbereich (1) zumindest abschnittsweise mit einer Lage (2) versehen wird, die energetisch anregbare Partikel umfasst, wobei die Lage (2) der Kontur des ersten Anschlussbereichs (1) angepasst und derart angeordnet wird, dass die Lage (2) mit einem Leitungsende einer Leitung in Anlage bringbar ist.

23. Verfahren nach Anspruch 22, **dadurch gekennzeichnet, dass** der erste Anschlussbereich (1) mit einer Folie versehen wird.

24. Verfahren nach Anspruch 23, **dadurch gekennzeichnet, dass** die Folie durch eine Wickelbewegung aufgebracht wird.

25. Verfahren nach Anspruch 22, **dadurch gekennzeichnet, dass** der erste Anschlussbereich (1) mit einem Schlauch, insbesondere einem Schrumpfschlauch, versehen wird.

26. Verfahren nach Anspruch 22, **dadurch gekennzeichnet, dass** in den ersten Anschlussbereich (1) eine Buchse eingebracht, insbesondere eingeschoben, wird.

27. Verfahren nach Anspruch 22, **dadurch gekennzeichnet, dass** die Lage (2) auf den ersten Anschlussbereich (1) aufgespritzt wird.

28. Verfahren nach Anspruch 22, **dadurch gekennzeichnet, dass** der erste Anschlussbereich (1) und die Lage (2) koextrudiert werden.

29. Verfahren zum Herstellen einer Leitung, insbesondere für den Anschluss an eine Kupplung, mit einem Leitungsende (6), bei dem das Leitungsende (6) mit einer Lage (7) versehen wird, die energetisch anregbare Partikel umfasst, wobei die Lage (7) der Kontur des Leitungsendes (6) angepasst wird.

30. Verfahren nach Anspruch 29, **dadurch gekennzeichnet, dass** das Leitungsende (6) mit einer Folie versehen wird.

31. Verfahren nach Anspruch 30, **dadurch gekennzeichnet, dass** die Folie durch eine Wickelbewegung aufgebracht wird.

32. Verfahren nach Anspruch 29, **dadurch gekennzeichnet, dass** das Leitungsende (6) mit einem Schlauch, insbesondere einem Schrumpfschlauch, versehen wird.

33. Verfahren nach Anspruch 29, **dadurch gekennzeichnet, dass** auf das Leitungsende (6) eine Buchse (9) aufgebracht, insbesondere aufgeschoben wird.

34. Verfahren nach Anspruch 29, **dadurch gekennzeichnet, dass** die Lage (7) auf das Leitungsende (6) aufgespritzt wird.

35. Verfahren nach Anspruch 29, **dadurch gekennzeichnet, dass** das Leitungsende (6) und die Lage (7) koextrudiert werden.

36. Verfahren zum Verbinden von Leitungen mit den Schritten
- Herstellen einer Steckverbindung zwischen einem ersten Anschlussbereich (1) einer Kupplung, insbesondere einer Schnellkupplung, und einem Leitungsende (6) einer Leitung, wobei der erste Anschlussbereich (1) und/oder das Leitungsende (6) mit wenigstens einer Lage (7) versehen ist, die energetisch anregbare Partikel aufweist, und wobei die Lage mit dem ersten Anschlussbereich (1) und dem Leitungsende (6) in Anlage gebracht wird, und
- Einbringen der Steckverbindung in ein magnetisches oder elektromagnetisches Feld.

37. Verfahren zum Verbinden von Leitungen mit den Schritten:
- Herstellen einer Steckverbindung zwischen einem Leitungsende (6) einer Leitung und einem Leitungsende (6a) einer weiteren Leitung, wobei zwischen den beiden Leitungsenden (6, 6a) eine Lage (7) angeordnet ist, die energetisch anregbare Partikel aufweist, und
- Einbringen der Steckverbindung in ein magnetisches oder elektromagnetisches Feld.

38. Verfahren zum Lösen von Leitungen mit dem Schritt
- Einbringen einer Anordnung, umfassend eine Kupplung, insbesondere eine Schnellkupplung, und eine Leitung, in ein magnetisches oder elektromagnetisches Feld, wobei die Kupplung und die Leitung durch eine Schicht (8) schweißtechnisch oder klebetechnisch verbunden sind, die energetisch anregbare Partikel umfasst.

39. Verfahren zum Lösen von Leitungen mit dem Schritt
- Einbringen einer Anordnung, umfassend zwei Leitungen in ein magnetisches oder elektromagnetisches Feld, wobei die beiden Leitungen durch eine Schicht (8) schweißtechnisch oder klebetechnisch verbunden sind, die energetisch anregbare Partikel umfasst.
